Europäisches Patentamt

European Patent Office

Office européen des brevets

(11) Publication number: **0 225 099 B1**

(12) **EUROPEAN PATENT SPECIFICATION**

(45) Date of publication of patent specification: **15.01.92**  (51) Int. Cl.⁵: **C08F 297/08**

(21) Application number: **86308952.0**

(22) Date of filing: **17.11.86**

(54) **Process for continuously producing a propylene-ethylene block copolymer.**

(30) Priority: **15.11.85 JP 255867/85**

(43) Date of publication of application:
**10.06.87 Bulletin 87/24**

(45) Publication of the grant of the patent:
**15.01.92 Bulletin 92/03**

(84) Designated Contracting States:
**DE FR GB**

(56) References cited:
**EP-A- 0 094 818**

**DATABASE WPIL, no. 80-74323C, Derwent
Publications LTD, London, GB; & JP-A-55 115
417 (SHOWA DENKO K.K.) 06-09-1980**

**DATABASE WPIL, no. 83-05496K, Derwent
Publications LTD, London, GB; & JP-A-57 195
718 (MITSUI TOATSU CHEM., INC.)**

(73) Proprietor: **Chisso Corporation
6-32, Nakanoshima 3-chome Kita-ku
Osaka-shi Osaka-fu(JP)**

(72) Inventor: **Chiba, Hiromasa
182, Monzen 2-chome
Ichiharashi Chibaken(JP)**
Inventor: **Oka, Takahiro
17, Higashi 2-chome Tatsumidai
Ichiharashi Chibaken(JP)**

(74) Representative: **Lamb, John Baxter et al
MARKS & CLERK 57-60 Lincoln's Inn Fields
London WC2A 3LS(GB)**

## Description

This invention relates to a process for continuously producing a propylene-ethylene block copolymer. More particularly it relates to a process for producing, in high yield, a propylene-ethylene block copolymer having well balanced qualities such as high-impact properties, stiffness. processability.

Crystalline polypropylene produced using a stereoregular catalyst has good characteristics in respect of stiffness, heat resistance, but has a low high-impact strength, particularly at low temperatures; hence its practical use application field has been restricted. In order to overcome such drawbacks, a number of processes for block-copolymerizing propylene with ethylene, or other $\alpha$-olefins, have been proposed. Such blockcopolymerization processes make it possible to improve the low temperature high-impact strength of polypropylene to a large extent without reducing stiffness, heat resistance so much, but problems relating to production and quality, specific of block copolymerization processes, have been raised. Thus, if the block copolymer is produced by a batch polymerization process, the yield of copolymer per unit time, per unit polymerization vessel is lower than that in a continuous polymerization process, that is the cost becomes higher. On the other hand, in a multi-stage continuous polymerization process, there occurs a distribution (which is considered as being close to a complete mixing vessel distribution) relative to the retention times of the respective catalyst particles in the polymerization vessels of the respective stages so that there are formed aggregates of polymer particles having a distribution relative to the content proportions of the polypropylene part (a part containing a large quantity of propylene) and the polyethylene part (a part containing a relatively large quantity of ethylene). Hence there are problems of quality originating from the non-uniformity of the distribution. In order to overcome such a drawback of the continuous polymerization process, a number of processes have been proposed. For example, according to Japanese laid-open patent application Nos. Sho 58-49716.1983, Sho 55-ll6716/l980, Sho 58-69215/l983, a process has been proposed wherein a slurry having left the propylene polymerization stage is classified by means of cyclone and the resulting fine particles are again to the propylene polymerization stage. However, since the classification of the catalyst particle size does not always correspond to the retention time distribution, improvement in non-uniformity is insufficient.

Japanese laid-open patent applications Nos. Sho 57-l95718/l982, Sho-2981l/l983 disclose a process wherein catalyst feed and slurry withdrawal from the polymerization vessel are carried out intermittently to reduce the quantity of catalyst entering the ethylene polymerization stage within a short retention time, but this gives rise to the problem that the polymerization reaction may be unstable.

Further, certain processes, like that of the present invention, have been proposed wherein the slurry from the propylene polymerization stage is treated with an electron-donor compound or the like to thereby selectively inactivate the catalyst particles having left the polymerization vessel with in an insufficiently short retention time (short pass catalyst). For example, Japanese laid-open patent application Nos. Sho 58-326l5/l983, Sho 57-l743l0/l982, Sho 57-l743ll/l982, Sho 57-l47508/l983, etc. propose halogen compounds as additives for the inactivation, but the effectiveness of selectively inactivating the catalyst particles is not yet sufficient. Still further, Japanese laid-open patent applications Nos. Sho 57-l45ll5/l982 and Sho 55-115417/1980 propose various electron-donor compounds, but even use of compounds in the range wherein they are used in the Examples has been still insufficient in the effectiveness for achieving the object of the present invention, i.e. a process for continuously producing a block copolymer having physical properties corresponding to those obtained using a batch-wise polymerization process.

It has now been found, in accordance with the present invention, that the above object can be achieved by selectively deactivating the catalyst having passed through the propylene polymerisation stage at a retention time which is far shorter than the average retention time, at the ethylene polymerization stage by the use of a compound having an effectiveness of inhibiting the polymerisation reaction at the ethylene polymerisation stage, in which the compound can prevent formation of polymer particles having a far higher proportion of the polyethylene part than that obtained with so far known compounds.

As apparent from the foregoing, the object of the present invention is to provide a process for continuously producing a propylene-ethylene block copolymer using a stereoregular catalyst and capable of producing in good yield, a copolymer having well-balanced qualities such as high-impact properties, stiffness, processability.

According to the invention there is provided a continuous multi-stage process for the production of a propylene-ethylene block copolymer which comprises:

(i) in a first polymerization stage, directed mainly to the polymerization of propylene, continuously polymerizing propylene, alone or in admixture with ethylene, in the presence of a stereoregular catalyst comprising (A) a titanium-containing solid catalyst component combined with (B) an organoaluminium compound of the formula $Al(R^2)_m X_{3-m}$ (in which $R^2$ is a $C_1$-$C_{20}$ hydrocarbyl group, X is a halogen atom

and $\underline{m}$ is a number from 1.5 to 3), and an inert organic solvent or propylene as solvent; and

(ii) in a second polymerization stage, continuously polymerizing ethylene, alone or in admixture with propylene, in the presence of the polymerization reaction mixture from the first stage after partial inactivation of the stereoregular catalyst;

characterized in that (a) the first polymerization stage is carried out in two or more polymerization vessels connected in series and using a propylene/ethylene feed containing from 0 to 5% by weight of ethylene, based on the total of propylene and ethylene, to produce from 60 to 95% by weight of the final polymerization product; (b) the stereoregular catalyst is partially inactivated by addition thereto of a glycol ether (C) in an amount such that the ratio (mole/atom) of moles of glycol to atoms of titanium in the stereoregular catalyst (A) is from 0.0l to l.0; and (c) the second polymerization is carried out in one or more reaction vessels using an ethylene/propylene feed containing from l0 to l00% by weight of ethylene, based on the total weight of ethylene and propylene, to produce from 5 to 40% by weight of the final polymerization product.

In accordance with a preferred embodiment of the invention, the melt index of the polymer obtained in the first polymerization stage [hereinafter referred to as MI (l)] and the melt index of the polymer obtained in the second polymerization stage [hereinafter referred to as MI (2)] satisfy the relationship.

$$\log MI \ (l)/MI \ (2) \ = \ 2 \text{ to } 5$$

In accordance with another preferred embodiment of the invention glycol ether (C) is added in such a quantity that the catalyst activity after its addition is from 30 to 80% of the catalyst activity before its addition.

A wide variety of titanium-containing solid components (A) may be used in the present invention provided they are titanium-containing solid catalysts. The so-called highly active catalysts are preferred and examples of these include highly active, reduction type titanium trichloride obtained by reducing $TiCl_4$ with an organoaluminum, followed by treating the resulting material with an electron donor compound and an electron-acceptor compound; and supported type catalysts obtained by contacting $TiCl_4$, a magnesium compound and an electron-donor compound. Highly active catalysts are preferred since the catalyst activity is reduced due to addition of glycol ethers, and use of highly active catalyst makes deashing after polymerization easier.

Examples of organoaluminium compounds (B) include diethylaluminium chloride, triethyl-aluminium, tri-n-butylaluminium, triisobutylaluminium, tri-n-hexyl-aluminium, diethylaluminium bromide, diethylaluminium iodide. These may be used singly or in admixture.

Further, besides the titanium-containing component (A) and organoaluminium compound (B), compounds generally used as a third component such as electron-donor compounds may be used. Examples of such compounds are compounds containing atoms of oxygen, nitrogen, sulphur, phosphorus, silicon, etc; for example ethers, alcohols, esters, aldehydes, fatty acids, ketones, nitriles, amines, amides, ureas, thioureas, isocyanates, azo compounds, phosphines, phosphites, phosphinites, thioethers, thioalcohols, organosilicon compounds, etc.

Examples of component (C) (the glycol ether) which is indispensably used in the second stage of the process of the invention are as follows: glycol ethers such as ethylene glycol monoalkyl ethers, ethylene glycol dialkyl ethers, propylene glycol monoalkyl ethers, propylene glycol dialkyl ethers (more specifically ethylene glycol monomethyl ether, ethylene glycol dimethyl ether, ethylene glycol monoethyl ether, ethylene glycol diethyl ether, ethylene glycol monopropyl ether, ethylene glycol dipropyl ether, ethylene glycol monobutyl ether, ethylene glycol dibutyl ether, propylene glycol monomethyl ether, propylene glycol dimethyl ether, propylene glycol monoethyl ether, propylene glycol diethyl ether, propylene glycol monopropyl ether, propylene glycol dipropyl ether, propylene glycol monobutyl ether and propylene glycol dibutyl ether; and glycol condensates such as diethylene glycol monoalkyl ethers, diethylene glycol dialkyl ethers, triethylene glycol monoalkyl ethers, triethylene glycol dialkyl ethers, tetraethylene glycol monoalkyl ethers, tetraethylene glycol dialkyl ethers, dipropylene glycol monoalkyl ethers, dipropylene glycol dialkyl ethers, tripropylene glycol monoalkyl ethers, tripropylene glycol dialkyl ethers, tetrapropylene glycol monoalkyl ethers, tetrapropylene glycol dialkyl ethers, polyethylene glycol monoalkyl ethers, polyethylene glycol dialkyl ethers, polypropylene glycol monoalkylethers, polyproylene glycol dialkyl ethers. The alkyl groups of these ethers may, for example, be linear chain hydrocarbons of l to 20 carbon atoms. Further, glycol ethers obtained by reacting ethylene oxide with propylene oxide may also be used.

As to the quantity of the ether (C) used, varied effects are brought about depending on the nature of the glycol ethers but the ethers should be used in a ratio (mol/atom) to the Ti in component (A) of 0.0l to l.0. It is preferred to add component (C) in an amount such that the catalyst activity is from 30 to 80%, taking the catalyst activity, when no glycol ether is added, to be l00%. If too much ether is added, although the effect of inactivating the short pass catalyst is great, reduction in the catalyst activity as the whole is also so large that an excess quantity is economically undesirable, and, moreover, control of the ratio of the quantity of polymer polymerized in the first polymerization stage to that in the second polymerization stage is restricted. If the amount of (C) is too small, the effectiveness of selectively inactivating the short pass catalyst is insufficient.

The reason why the glycol ethers (C) used in the present invention are far superior in effectiveness to so far known ketones, amines, amides, alkyl ethers, carboxylic acid esters, halides, etc. has not yet been clarified, but it is presumed that component (C) reacts with aluminium compound (B) to form an inert-solvent-insoluble complex, and hence it is difficult to react with the catalyst inside the polymer particles; thus the function of preferentially inactivating the short pass catalyst is notably developed. Thus, it is presumed to be a necessary condition that an inert-solvent-insoluble liquid complex is formed and that this complex cannot readily permeate into the inside of polymer particles.

Inert solvents for use in the process of the invention include conventionally used solvents such as propane, butane, hexane, heptane, kerosine. Further, propylene itself may be used as the solvent. The first stage polymerization is usually carried out at a polymerization temperature of $20°$ to $80°$ C, preferably $50°$ to $75°$ C, under a polymerization pressure of 0 to 4900 KPa (0 to 50 Kg/cm²G) and for an average retention time of 30 minutes to 15 hours. To control the molecular weight, hydrogen is usually used and the polymerization is suitably carried out so as to give a polymer having a melt index MI of 0.5 to 200.

As to the monomer composition fed to the first stage, polymerization is carried out so that ethylene ($C_2^=$) forms 0 to 5% by weight of the total of ethylene ($C_2^=$) and propylene ($C_3^=$). If the amount of etheylene is more that 5% by weight, drawbacks occur in that the physical properties such as stiffness, heat resistance, which are the characteristics of polypropylene are reduced.

Further, as a third component of the monomers fed, it is also possible to add and feed l-butene, 4-methyl-petene-l, styrene or non-conjugated dienes in an amount of 0 to l0% relative to propylene.

The amount of polymer polymerized in the first stage, relative to the total quantity of the finally obtained propylene-ethylene block copolymer, is from 60 to 95% by weight, preferably 75 to 90% by weight. If the amount of polymer polymerized exceeds the range, the stiffness of the resulting product is reduced, while if it is less than the range, improvement in the low-temperature, high-impact strength is insufficient.

The first stage polymerization is carried out in two or more polymerization vessels connected in series. If only one polymerization vessel is used then, although a considerable improvement effect corresponding to the process of the invention is observed, the quality of product is still inferior to that obtained by a batch polymerisation process; hence i.e. use of one polymerization vessel is insufficient to achieve the object of the invention.

The resulting polymerization slurry from the first stage polymerization, i.e. a polymerization reaction mixture, is continuously withdrawn, followed by addition of a glycol ether (C) and thereafter feeding the resulting mixture to the second stage polymerisation process. The glycol ether may be added either continuously or intermittently, but it is necessary to keep the addition interval within one-eighth or less of the average retention time. If the interval is too long, the effectiveness of the additive (C) is insufficient.

As to the addition of the glycol ether (C), this may be added to a tank (e.g. propylene monomer-Separating tank) provided between the first and second stages or it may be added directly to the second stage.

The second polymerisation stage (ii) is usually carried out at a polymerization temperature of $20°$ to $80°$ C, preferably $40°$ to $70°$ C, under a pressure of 0 to 4900 KPa (0 to 50 Kg/cm²G) and for an average retention time of 20 minutes to 10 hours. The molecular weight is usually controlled with hydrogen in a concentration in the gas phase of l to 40% by mol. The ratio of ethylene ($C_2^=$) to propylene ($C_3^=$) fed to the second stage is such that the ethylene forms from l0 to l00% by weight, preferably 20 to 70% by weight of the mixture. The amount of polymer polymerized in that stage is from 5 to 40% by weight, preferably l0 to 25% by weight, relative to the amount of the final propylene-ethylene block copolymer, Further, in addition to ethylene and proplene, other $\alpha$-olefins, non-conjugated dienes may be used at the same time.

The MI (l) of the polymer obtained in the first stage polymerization and MI (2) of the polymer obtained in the second stage polymerization process preferably satisfies the relationship

$$\log \frac{\underline{MI\ (1)}}{MI\ (2)} = 2 - 5 \qquad\qquad (I)$$

wherein MI represents a value of melt index measured at 230$^{\circ}$C under a load of 2.l6 Kg according to the method of4ASTM D-l238; and MI (l) represents the observed value of MI of the polymer produced in the first stage, while MI (2) represents a calulated value obtained from the observed value of MI after completion of the second stage [referred to as MI (l + 2)] and the polymer fraction at the fist stage (W$_1$) and the polymer fraction at the second stage (W$_2$) according to the following equation (2) and (3).

$$\log MI(l+2) = W_1 \log MI (l) + W_2 \log MI (2) \qquad (2)$$
$$W_1 + W_2 = l.0 \qquad (3)$$

If log MI(l)/MI(2) is less than 2, the resulting polymer is inferior in low-temperature high-impact strength, tensile elongation, weld strength, etc. Further, polymerization solvent-soluble polymer is formed in large quanitity; hence in this case, economy and plant operability are inferior.

If log MI(l)/MI(2) is greater than 5, it is impossible to completely prevent formation of FE (fish eyes) with the resulting polymer and the polymer is inferior in low-temperature high-impact strength and in appearance.

In order that the invention may be well understood the following Examples are given by way of illustration only.

In the examples, polymerization was carried out in the apparatus schematically illustrated in the accompanying drawings. Basically this apparatus comprises a first polymerization vessel l connected in series to a second polymerization vessel 2; the first polymerization stage of the process of the invention being carried out in vessels l and 2. Vessel 2 is in turn connected to a pressure drop vessel 3, where glycol ether may be added to the polymerization reaction mixture from the first stage. Vessel 3 is, again in turn, connected to polymerization vessel 4, in which the second polymerization stage is carried out, and vessel 4 is connected to pressure-drop vessel 5, whence product may be passed for post-treatment.

The measurement methods used in the Examples were as follows:

MI: According to ASTM D-1238 (g/10 min.), 230$^{\circ}$C, 2.16 Kg load.

Ethylene content:

According to infrared absorption spectra method (% by weight).

The ratio of the polymerisation quantity (i) to the quantity (ii):

Copolymers having the reaction ratio of ethylene/propylene varied were prepared in advance, followed by preparing a calibration curve with infrared absorption spectra, by the use of the above copolymers as standard samples to obtain the ratio of the quantities of ethylene/propylene reacted and further calculating the objective ratio from the ethylene content in the total polymer (wt./wt.).

Catalyst activity in the second stage polymerisation (ii):

The activity in the case where no glycol ether was added was made 100%.

FE: According to Chisso method (number of fish eyes/1000 cm$^2$).

Flexural modulus:

According to JIS K6758 [KPa (Kg F/cm$^2$)].

Tensile strength:

According to JIS R6758 [KPa (Kg f/cm$^2$)].

Tensile elongation at break:

According to JIS K6758 (%).

Izod impact strength (II):

According to JIS K6758 (Kg fcm/cm).

Du Pont impact strength (DI):

According to Chisso method. (Kg.cm).

With a Du Pont impact tester at -20$^{\circ}$C, a centre of impact having a hemisphere of 6.3 mm in radium at its tip end is contacted with an injection-moulded sample of 50 x 50 mm x 2 mm (thick) and a weight is dropped on the centre of impact from a height of 1 m to seek a value of 50% breakage.

Weld judgement:

According to Chisso method.

A dumbbell-shaped sample obtained by injection-moulding through both the end gates was folded and the broken state of the weld part was observed, the results being expressed as follows:

Δ: even when both the ends are contacted by folding, no crack occurs, but when it is folded up to l80$^{\circ}$, cracks occur;

x: before both ends are contacted by folding, cracks occur.

Example l

I) Catalyst preparation

n-Hexane (6 ℓ), diethylaluminium monochloride (DEAC) (5.0 mols) and diisoamyl ether (I2.0 mols) were mixed at 25° C for 5 minutes, followed by reacting these at the same temperature for 5 minutes to obtain a reaction fluid (I) (the molar ratio of diisoamyl ether/DEAC : 2.4). TiCℓ₄ (40 mols) was introduced into a reactor equipped with a stirrer and purged with nitrogen and heated to 35° C, followed by dropwise adding thereto the total quantity of the above reaction fluid (I) over I80 minutes, thereafter keeping the mixture at the same temperature for 30 minutes, raising the temperature up to 75° C, further reacting it for one hour, cooling down to room temperature, removing the supernatant, and four times repeating a procedure of adding n-hexane (30 ℓ) and removing by decantation to obtain a solid product (II) (I.9 Kg).

The total quantity of this solid product (II) was suspended in n-hexane (30 ℓ), and to the resulting suspension were added diisoamyl ether (I.6 Kg) and TiCℓ₄ (3.5 Kg) at room temperature (20° C) over about 5 minutes, followed by reacting the mixture at 65° C for one hour, cooling the reaction mixture down to room temperature (20° C) after completion of the reaction, removing the supernatant by decantation, five times repeating a procedure of adding n-hexane (30 ℓ), agitating the mixture for I5 minutes, allowing it to stand still and removing the supernatant, and drying under reduced pressure to obtain a solid product (III).

2) Catalyst adjustment

Into a 50 ℓ capacity tank were fed n-hexane (40 ℓ), diethylaluminium chloride (850 g), the above-mentioned solid product (360 g) and methyl para-toluylate (3.8 g), followed by feeding propylene gas at a rate of I80 g/h for 2 hours while keeping the mixture at 30° C with stirring to subject it to a preliminary treatment.

3) Polymerization method

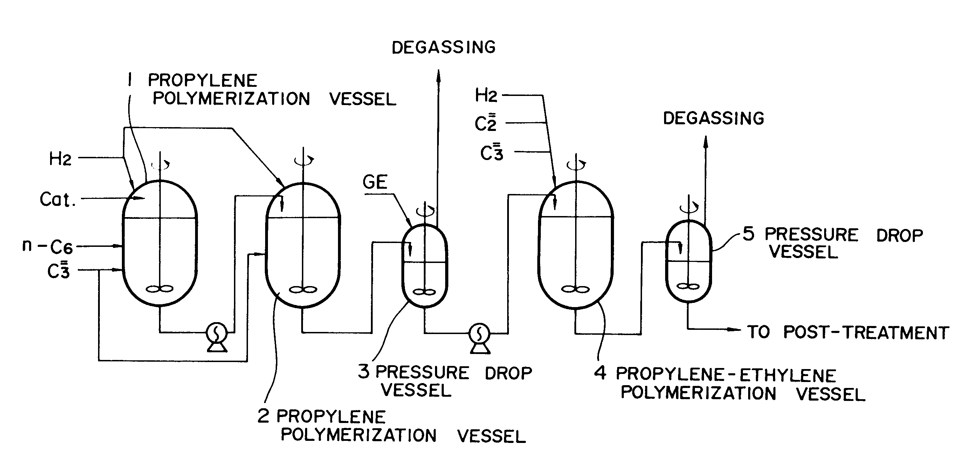

Polymerization was carried out by means of an apparatus shown in the accompanying figure.

Into a I50 ℓ polymerization vessel I were continuously fed propylene at a rate of I4 ℓ/h, n-hexane at a rate of 26 ℓ/h and a catalyst slurry at a rate of I60 mℓ/h, under a pressure of the polymerization vessel of 0.8 MPa (8 Kg/cm²)G and at a temperature of 70° C, the fine adjustment of the pressure being carried out by varying the quantity of the catalyst slurry fed. Into a polymerization vessel 2 was fed propylene at a rate of 6 ℓ/h under a pressure of 0.8 MPa (8 Kg/cm²)G and at a temperature of 70° C, the fine adjustment of the pressure being carried out by varying the quantity of propylene fed. Further, hydrogen was fed so as to give the same gas phase concentrations both in the polymerization vessel I and the polymerization vessel 2 as shown in Table I, while the analytical values according to process gas chromatography were observed. The slurry having left the polymerization vessel 2 was fed to a pressure drop vessel 3.

This pressure drop vessel 3 was adjusted to a temperature of 70° C and a pressure of 0.05 MPa (0.5 Kg/cm²)G, and a glycol ether as shown in the Table was added. The slurry withdrawn from the pressure drop vessel 3 was fed to a polymerization vessel 4.

Into the polymerization vessel 4 was fed ethylene at a rate of I.4 Kg/h at 60° C, and also propylene and hydrogen were fed so as to keep the gas composition in the gas phase part of the polymerization vessel 4 at a ratio of ethylene/(ethylene + propylene) = 0.35 and the hydrogen concentration in the gas phase part at the value shown in Table I.

The slurry having left the polymerization vessel 4 was subjected to pressure drop in a pressure drop vessel 5, followed by deactivating the catalyst with methanol, neutralizing with aqueous NaOH, washing with water, separating powder and drying to recover a powdery product (about 8 Kg/h). During the above course, slurries were sampled at the pressure drop vessels 3 and 5 and analyzed together with the powdery product.

4) Granulation method

To the powdery products (8 Kg) obtained above were added phenolic heat-stabilizer (0.008 Kg) and calcium stearate (0.008 Kg), followed by mixing these in a high-speed agitation type mixer (Henschel mixer (trade name)) at room temperature for 2 minutes and granulating the resulting mixture by means of an extrusion-granulator having a screw hole diameter of 40 mm.

5) Production of molded product

The granulated product obtained in the above paragraph 4) was molded by means of an injection molding machine at a molten resin temperature of 230°C and at a mold temperature of 50°C to prepare test pieces of JIS type, which were then subjected to conditioning in a room at a humidity of 50% and at a room temperature (23°C) for 72 hours, followed by measuring their values of physical properties as shown in the Table.

6) Measurement of fish eyes (FE)

The granulated product was made into a film of 30 $\mu$m thick by means of a T die of 40 mm manufactured by Yamaguchi Seisakusho Company (lip width: 30 cm), and the number of foreign matters having a diameter of 0.1 mm or larger was measured by means of a F.E. counter manufactured by Yasukawa Denki Company. The area of the film measured was 30,000 cm$^2$ and the number was calculated into a value per 1,000 cm$^2$. The results are shown in Table 2.

Comparative example 1

Example 1 was repeated except that no diethylene glycol dimethyl ether was added in the pressure drop vessel 3.

Examples 2 ~ 4

Example I was repeated except that the quantity of diethylene glycol dimethyl ether added in the pressure drop vessel 3 was varied. The results are shown in Tables I and 2.

Comparative examples 2 and 3

Example I was repeated except that the quantity of diethylene glycol dimethyl ether added in the pressure drop vessel 3 was varied. The results are shown in Tables I and 2.

When no diethylene glycol dimethyl ether is added or its quantity added is less than its range of the present invention, the FE-preventing effectiveness is small; the appearance of the products has a nonuniform luster to lose its commodity value; and the products are far inferior in DI, tensile elongation and weld judgement.

Further, in the case of Comparative example 3, since the catalyst activity in the polymerization step ii) was lowered and polymerization reaction hardly proceeded, the reaction was stopped.

Examples 5 and 6 and Comparative examples 4 and 5

Example I was repeated except that the gas phase hydrogen concentration in the polymerization (ii) was varied. If the MI value in the polymerization (ii) is lower than that of the range of the present invention, FE increases and DI lowers, while if the MI value is higher, the resulting polymer is inferior in that soluble polymer is formed in a large quantity as well as in the aspect of II.

Comparative examples 6 and 7

Example I was repeated except that addition of glycol ether in the separator (i) was omitted and the gas phase hydrogen concentration in the polymerization (ii) was varied as shown in the Tables. When MI at the polymerization process (ii) is raised, it is possible to reduce FE even if the glycol ether is omitted, but the case is inferior in the aspect of formation of soluble polymer, II, tensile elongation, weld judgement.

Examples 7 ~ I5

Example I was repeated except that the kind and quantity of the glycol ether were varied as shown in the Tables.

Comparative examples 8 ~ 20

Example I was repeated except that the glycol ether was replaced by electron-donative compounds as shown in Tables. In any of these examples, the effectiveness was far inferior as compared with the glycol ether of the present invention.

Comparative example 2l

Example I was repeated except that only one polymerization vessel was employed in the polymerization (i). In this case, even if the glycol ether is added, and even when the MI in the polymerization (ii) was in the range of MI in the polymerization (ii), the FE-preventing effectiveness was insufficient.

Examples l6 ~ l8

Example I was repeated except that the ratio of ethylene/(ethylene + propylene) - 0.35 in the gas phase of the polymerization vessel (3) was replaced by 0.45, 0.20 or 0.l5 respectively and the quantity of ethylene fed was made I.6 Kg, I.2 Kg or l0 Kg, respectively in Examples l6 ~ l8.

Table (1)   Results of polymerization conditions

| | Example 1 | Comp.ex.1 | Example 2 | Example 3 | Example 4 | Comp.ex.2 | Comp.ex.3 |
|---|---|---|---|---|---|---|---|
| Polymerization(i) | | | | | | | |
| gas phase $H_2$ mol% | 3 . 5 | → | → | → | → | → | → |
| MI(1)       g/10min | 1 5 . 7 | 1 4 . 8 | 1 4 . 5 | 1 6 . 4 | 1 4 . 7 | 1 4 . 7 | 1 5 . 2 |
| Separator (1) | | | | | | | |
| Glycol ether (GE) | a | — | a | → | → | → | → |
| Mol.ratio of GE in GE/catalyst | 0 . 3 | 0 | 0 . 0 5 | 0 . 1 | 0 . 6 | 1 . 5 | 0 . 0 0 5 |
| Polymerization(ii) | | | | | | | |
| Gas phase $H_2$ mol% | 3 . 0 | . → | → | → | → | → | → |
| MI(2)       g/10min | 0 . 0 0 5 | 0 . 0 0 6 | 0 . 0 0 6 | 0 . 0 0 5 | 0 . 0 0 5 | — | 0 . 0 0 7 |
| Polymztn.amt.ratio | | | | | | | |
| $\dfrac{\text{Polymztn.(i)}\ \text{wt}}{\text{Polymztn.(ii)}\ \text{wt}}$ | $\dfrac{7\ 9}{2\ 1}$ | $\dfrac{8\ 0}{2\ 0}$ | $\dfrac{7\ 9}{2\ 1}$ | $\dfrac{7\ 9}{2\ 1}$ | $\dfrac{8\ 2}{1\ 8}$ | — | $\dfrac{7\ 8}{2\ 2}$ |
| Product powder | | | | | | | |
| MI | 2 . 9 | 3 . 1 | 2 . 9 | 3 . 0 | 3 . 5 | — | 2 . 8 |
| Ethylene content wt% | 1 2 . 1 | 1 1 . 8 | 1 2 . 3 | 1 2 . 0 | 1 1 . 5 | — | 1 2 . 2 |
| $\log\dfrac{MI(1)}{MI(2)}$ | 3 . 5 | 3 . 4 | 3 . 4 | 3 . 5 | 3 . 5 | — | 3 . 3 |
| Soluble polymer% | 3 . 8 | 3 . 6 | 3 . 9 | 3 . 8 | 3 . 5 | — | 4 . 0 |
| Activity of polymztn.(ii) % | 6 0 | 1 0. 0 | 7 0 | 6 5 | 4 0 | 1 0 | 9 0 |

a:   Diethylene glycol dimethyl ether

EP 0 225 099 B1

## Table 1 (2)

| | Example 5 | Example 6 | Comp.ex. 4 | Comp. ex. 5 | Comp. ex. 6 | Comp. ex. 7 |
|---|---|---|---|---|---|---|
| Polymerization(i) | | | | | | |
| Gas Phase $H_2$ mol% | 4 . 5 | 2 . 5 | 6 . 8 | 2 . 5 | 2 . 3 | 1 . 8 |
| MI(1) g/10min | 2 2 . 5 | 8 . 4 | 4 3 | 8 . 1 | 7 . 4 | 5 . 0 |
| Separator (1) | | | | | | |
| Glycol ether (GE) | a | → | → | → | — | — |
| Mol.ratio of Ti in GE/catalyst | 0 . 3 | → | → | → | 0 | 0 |
| Polymerization(ii) | | | | | | |
| Gas phase $H_2$ mol% | 2 . 5 | 4 . 0 | 1 . 5 | 1 0 . 0 | → | 1 7 . 0 |
| MI(2) g/10min | 0 . 0 0 1 | 0 . 0 3 | 0 . 0 0 0 1 | 0 . 1 | 0 . 1 | 0 . 5 |
| Polymztn.amt.ratio | | | | | | |
| $\dfrac{\text{Polymztn.(i) wt}}{\text{Polymztn.(ii) wt}}$ | $\dfrac{8\,0}{2\,0}$ | $\dfrac{8\,1}{1\,9}$ | $\dfrac{7\,8}{2\,2}$ | $\dfrac{8\,1}{1\,9}$ | $\dfrac{8\,2}{1\,8}$ | $\dfrac{8\,2}{1\,8}$ |
| Product powder | | | | | | |
| MI | 3 . 0 | 2 . 9 | 2 . 5 | 3 . 5 | 3 . 4 | 3 . 3 |
| Ethylene content wt% | 1 2 . 5 | 1 2 . 0 | 1 2 . 3 | 1 1 . 8 | 1 2 . 0 | 1 1 . 8 |
| $\log\dfrac{MI(1)}{MI(2)}$ | 4 . 4 | 2 . 4 | 5 . 6 | 1 . 9 | 1 . 9 | 1 . 0 |
| Soluble polymer% | 3 . 4 | 4 . 3 | 3 . 3 | 6 . 2 | 5 . 8 | 7 . 9 |
| Activity of polymztn.(ii) % | 7 0 | . 7 0 | 7 0 | 7 0 | 1 0 0 | 1 0 0 |

a: Diethylene glycol dimethyl ether

EP 0 225 099 B1

## Table 1 (3)

| | Example 7 | Example 8 | Example 9 | Example 10 | Example 11 | Example 12 | Example 13 | Example 14 | Example 15 |
|---|---|---|---|---|---|---|---|---|---|
| Polymerization (i) | | | | | | | | | |
| Gas phase $H_2$ mol% | 3.5 | → | → | → | → | → | → | → | → |
| MI(1)    g/10min | 13.2 | 11.9 | 12.0 | 11.9 | 13.3 | 13.4 | 13.9 | 13.1 | 13.0 |
| Separator (1) | | | | | | | | | |
| Glycol ether (GE) | b | → | c | → | d | e | f | g | h |
| Mol.ratio of Ti in GE/catalyst | 0.3 | 0.6 | 0.3 | 0.6 | 0.3 | 0.3 | 0.5 | 0.5 | 0.6 |
| Polymerization(ii) | | | | | | | | | |
| Gas phase $H_2$ mol% | 3.0 | → | → | → | → | → | → | → | → |
| MI(2)    g/10min | 0.008 | 0.007 | 0.007 | 0.006 | 0.008 | 0.007 | 0.008 | 0.007 | 0.008 |
| Polymztn.amt.ratio | | | | | | | | | |
| $\dfrac{\text{Polymztn.(i) wt}}{\text{Polymztn.(ii) wt}}$ | $\dfrac{80}{20}$ | $\dfrac{81}{19}$ | $\dfrac{81}{19}$ | $\dfrac{82}{18}$ | $\dfrac{80}{20}$ | $\dfrac{81}{19}$ | $\dfrac{79}{21}$ | $\dfrac{80}{20}$ | $\dfrac{81}{19}$ |
| Product powder | | | | | | | | | |
| MI | 3.0 | 2.9 | 3.2 | 3.0 | 3.1 | 3.2 | 2.9 | 2.9 | 3.2 |
| Ethylene content wt% | 12.1 | 12.2 | 11.8 | 11.8 | 12.0 | 11.7 | 12.3 | 11.8 | 12.0 |
| $\log\dfrac{MI(1)}{MI(2)}$ | 3.2 | 3.2 | 3.2 | 3.3 | 3.2 | 3.3 | 3.2 | 3.3 | 3.2 |
| Soluble Polymer % | 3.5 | 3.4 | 3.6 | 3.8 | 3.2 | 3.5 | 3.7 | 3.9 | 3.7 |
| Activity of polymztn.(ii) % | 65 | 50 | 65 | 50 | 60 | 55 | 65 | 65 | 60 |

b: Ethylene glycol monobutyl ether  
c: Tetraethylene glycol dimethyl ether  
d: Ethylene glycol monopropyl ether  
e: Diethylene glycol dipropyl ether  
f: Dipropylene glycol dimethyl ether  
g: Triethylene glycol diethyl ether  
h: Tetraethylene glycol monobutyl ether

Table 1 (4)

| | Comp. ex. 8 | Comp. ex. 9 | Comp. ex. 10 | Comp. ex.11 | Comp. ex.12 | Comp. ex.13 | Comp. ex.14 | Comp. ex.15 |
|---|---|---|---|---|---|---|---|---|
| Polymerization (i) | | | | | | | | |
| Gas phase $H_2$ mol% | 3 . 5 | → | → | → | → | → | → | → |
| MI(1) g/10min | 1 3 . 6 | 1 1 . 9 | 1 4 . 3 | 1 2 . 3 | 1 3 . 7 | 1 2 . 4 | 1 3 . 6 | 1 2 . 9 |
| Separator (1) | | | | | | | | |
| Glycolether (GE) | i | → | j | → | k | l | m | n |
| Mol.ratio of Ti in GE/catalyst | 0 . 2 | 0 . 6 | 1 . 5 | 3 . 0 | 3 . 0 | 4 . 0 | 0 . 7 | 0 . 3 |
| Polymerization(ii) | | | | | | | | |
| Gas phase $H_2$ mol% | 3 . 0 | → | → | → | → | → | → | → |
| MI(2) g/10min | 0 . 0 0 7 | 0 . 0 0 8 | 0 . 0 0 6 | 0 . 0 0 7 | 0 . 0 0 6 | 0 . 0 0 7 | 0 . 0 0 6 | 0 . 0 0 6 |
| Polymztn.amt.ratio | | | | | | | | |
| Polymztn. (i) wt / Polymztn.(ii) wt | 80 / 20 | 82 / 18 | 79 / 21 | 82 / 18 | 78 / 22 | 81 / 19 | 80 / 20 | 81 / 19 |
| Product powder | | | | | | | | |
| MI | 3 . 0 | 3 . 2 | 2 . 8 | 3 . 2 | 2 . 5 | 3 . 0 | 2 . 9 | 3 . 0 |
| Ethylene content wt% | 1 2 . 1 | 1 1 . 8 | 1 2 . 1 | 1 1 . 7 | 1 2 . 3 | 1 1 . 9 | 1 2 . 2 | 1 1 . 9 |
| $\log\frac{MI(1)}{MI(2)}$ | 3 . 3 | 3 . 2 | 3 . 4 | 3 . 2 | 3 . 4 | 3 . 2 | 3 . 4 | 3 . 3 |
| Soluble Polymer % | 3 . 6 | 3 . 5 | 3 . 4 | 3 . 7 | 4 . 2 | 4 . 0 | 3 . 5 | 3 . 4 |
| Activity of polymztn.(ii) % | 7 0 | 5 5 | 7 0 | 5 0 | 6 5 | 6 5 | 7 0 | 5 5 |

i: Acetophenone     j: Methyl p-toluylate     k: Triethylamine

l: Tri-n-butylamine     m: Hexaphosphoric acid amide

n: Ethylaluminum dichloride (EADC)

## Table 1 (5)

| | Comp. ex.16 | Comp. ex.17 | Comp. ex.18 | Comp. ex.19 | Comp. ex.20 | Comp. ex.21 | Ex. 16 | Ex. 17 | Ex. 18 |
|---|---|---|---|---|---|---|---|---|---|
| Polymerization (i) | | | | | | | | | |
| Gas phase $H_2$ mol% | 3 . 5 | → | → | → | → | → | → | → | → |
| MI(1) g/10min | 1 2 . 9 | 1 3 . 2 | 1 4 . 3 | 1 3 . 9 | 1 2 . 7 | 1 2 . 9 | 1 2 . 4 | 1 2 . 7 | 1 2 . 2 |
| Separator (1) | | | | | | | | | |
| Glycol ether (GE) | O | P | Q | R | S | a | a | → | → |
| Mol.ratio of Ti in GE/catalyst | 0 . 3 | 2 . 0 | 4 . 0 | 1 . 5 | 1 . 0 | 0 . 6 | 0 . 3 | → | → |
| Polymerization (ii) | | | | | | | | | |
| Gas phase $H_2$ mol% | 3 . 0 | → | → | → | → | → | 4 . 0 | 2 . 5 | 2 . 0 |
| MI(2) g/10min | 0 . 0 0 7 | 0 . 0 0 8 | 0 . 0 0 6 | 0 . 0 0 8 | 0 . 0 0 7 | 0 . 0 0 6 | 0 . 0 0 5 | 0 . 0 0 6 | 0 . 0 0 8 |
| Polymztn.amt.ratio | | | | | | | | | |
| Polymztn. (i) wt / Polymztn.(ii) wt | $\frac{81}{19}$ | $\frac{80}{20}$ | $\frac{79}{21}$ | $\frac{78}{22}$ | $\frac{82}{18}$ | $\frac{81}{19}$ | $\frac{81}{19}$ | $\frac{82}{18}$ | $\frac{83}{17}$ |
| Product powder | | | | | | | | | |
| MI | 3 . 1 | 3 . 0 | 2 . 8 | 2 . 7 | 3 . 3 | 3 . 0 | 2 . 8 | 3 . 2 | 3 . 5 |
| Ethylene content wt% | 1 2 . 1 | 1 2 . 3 | 1 2 . 3 | 1 2 . 4 | 1 1 . 7 | 1 2 . 1 | 1 4 . 2 | 1 0 . 1 | 8 . 4 |
| $\log \frac{MI(1)}{MI(2)}$ | 3 . 3 | 3 . 2 | 3 . 4 | 3 . 2 | 3 . 3 | 3 . 3 | 3 . 4 | 3 . 3 | 3 . 2 |
| Soluble Polymer % | 3 . 3 | 4 . 2 | 4 . 5 | 3 . 9 | 4 . 1 | 4 . 5 | 3 . 0 | 4 . 5 | 4 . 2 |
| Activity of polymztn.(ii) % | 5 5 | 6 5 | 7 0 | 6 5 | 6 0 | 4 0 | 6 0 | 6 0 | 6 0 |

O: Ethylaluminum susquichloride     P: Diisoamyl ether     Q: Di-n-butyl ether

R: Tetraethoxysilane     S: Trimethylchlorosilane

EP 0 225 099 B1

Table 2 (1)    Physical properties of polymers

| | | Ex. 1 | Comp. ex. 1 | Ex. 2 | Ex. 3 | Ex. 4 | Comp. ex. 2 | Comp. ex. 3 |
|---|---|---|---|---|---|---|---|---|
| MI | (Pellet) g/10min | 2.8 | 2.9 | 2.8 | 2.8 | 3.3 | — | 2.7 |
| FE | No./1000cm³ | 15 | >1000 | 40 | 25 | 2 | — | 280 |
| DI | (-20°C) kg·cm | 250 | 12 | 220 | 240 | 300 | — | 35 |
| II | (23°C) kgcm/cm | 25 | 17 | 24 | 25 | 23 | — | 20 |
| | (-20°C) | 9.3 | 8.6 | 9.1 | 9.5 | 9.3 | — | 8.8 |
| Flexural modulus $GPa$ (10⁴ kg/cm²) | | 1.08 / (1.10) | 1.10 / (1.12) | 1.13 / (1.15) | 1.08 / (1.10) | 1.12 / (1.14) | — | 1.10 / (1.12) |
| Tensile strength $MPa$ (kg/cm²) | | 27.5 / (280) | 28.0 / (285) | 27.9 / (284) | 27.6 / (281) | 28.3 / (289) | — | 28.2 / (282) |
| Tensile elongtn. at break % | | >400 | 250 | >400 | >400 | >400 | — | 320 |
| Weld judgement Chisso method | | ◎ | O | ◎ | ◎ | ◎ | — | O |

Table 2 (2)

| | | Ex. 5 | Ex. 6 | Comp. ex. 4 | Comp. ex. 5 | Comp. ex. 6 | Comp. ex. 7 |
|---|---|---|---|---|---|---|---|
| MI | (Pellet) g/10 min | 2.8 | 2.7 | 2.3 | 3.3 | 3.3 | 3.1 |
| FE | No./1000cm³ | 45 | 5 | 88 | 0 | 186 | 50 |
| DI | (-20°C) kg·cm | 200 | 280 | 140 | 280 | 40 | 220 |
| II | (23°C) kgcm/cm | 26 | 24 | 26 | 18.7 | 18.5 | 17.5 |
| | (-20°C) | 9.2 | 9.0 | 9.3 | 8.8 | 8.7 | 8.7 |
| Flexural modulus $GPa$ (10⁴ kg/cm²) | | 1.13 / (1.15) | 1.11 / (1.13) | 1.08 / (1.10) | 1.15 / (1.17) | 1.14 / (1.16) | 1.12 / (1.14) |
| Tensile strength $MPa$ (kg/cm²) | | 27.3 / (279) | 28.4 / (289) | 27.1 / (276) | 27.7 / (282) | 27.9 / (284) | 28.3 / (288) |
| Tensile elongtn. at break % | | >400 | >400 | >400 | >400 | 300 | 350 |
| Weld judgement Chisso method | | ◎ | ◎ | ◎ | ◎ | O | O |

EP 0 225 099 B1

EP 0 225 099 B1

Table 2 (3)

| | | Example 7 | Example 8 | Example 9 | Example10 | Example 11 | Example 12 | Example13 | Example14 | Example15 |
|---|---|---|---|---|---|---|---|---|---|---|
| MI | ( Pellet ) g/10 min | 2 . 9 | 2 . 8 | 3 . 0 | 2 . 8 | 2 . 8 | 3 . 1 | 2 . 7 | 2 . 9 | 3 . 0 |
| FE | No./1000cm³ | 2 5 | 1 6 | 3 1 | 1 8 | 3 5 | 3 2 | 2 4 | 2 7 | 2 1 |
| DI | (-20°C) kg·cm | 2 4 0 | 2 4 0 | 2 2 0 | 2 4 0 | 2 3 0 | 2 0 0 | 2 4 0 | 2 5 0 | 2 4 0 |
| II | ⊥ (23°C) kgcm/cm | 2 4 . 2 | 2 5 . 5 | 2 3 . 4 | 2 3 . 2 | 2 4 . 6 | 2 2 . 5 | 2 5 . 6 | 2 3 . 5 | 2 4 . 7 |
| | (-20°C) | 9 . 1 | 9 . 3 | 9 . 0 | 8 . 8 | 9 . 0 | 8 . 8 | 9 . 2 | 9 . 1 | 9 . 4 |
| Flexural modulus (10³ kg/cm²) {≠Pa | 1·08 (1 . 1 0) | 1·11 (1 . 1 3) | 1·15 (1 . 1 7) | 1·12 (1 . 1 4) | 1·13 (1 . 1 5) | 1·14 (1 . 1 6) | 1·10 (1 . 1 2) | 1·09 (1 . 1 1) | 1·11 (1 . 1 3) |
| Tensile strength ⌐ kg/cm² MPa | 27·3 (2 7 0) | 27·6 (2 8 1) | 27·2 (2 7 7) | 27·5 (2 8 0) | 28·0 (2 8 5) | 27·7 (2 8 2) | 27·9 (2 8 4) | 27·6 (2 8 1) | 27·1 (2 7 6) |
| Tensile elongtn. at break % | > 4 0 0 | > 4 0 0 | > 4 0 0 | > 4 0 0 | > 4 0 0 | > 4 0 0 | > 4 0 0 | > 4 0 0 | > 4 0 0 |
| Weld judgement Chisso method | ◎ | ◎ | ◎ | ◎ | ◎ | ◎ | ◎ | ◎ | ◎ |

Table 2 (4)

| | | Comp. ex. 8 | Comp. ex. 9 | Comp. ex. 10 | Comp. ex. 11 | Comp. ex. 12 | Comp. ex. 13 | Comp. ex. 14 | Comp. ex. 15 |
|---|---|---|---|---|---|---|---|---|---|
| MI | ( Pellet ) g/10 min | 2 . 9 | 3 . 0 | 2 . 9 | 3 . 1 | 2 . 5 | 2 . 9 | 2 . 7 | 3 . 0 |
| FE | No./1000cm³ | 3 8 0 | 1 5 0 | > 1 0 0 0 | > 1 0 0 0 | 4 4 0 | 2 1 0 | 6 3 0 | > 1 0 0 0 |
| DI | (-20°C) kg·cm | 4 0 | 1 2 0 | 3 0 | 2 5 | 6 5 | 1 0 0 | 4 5 | 2 0 |
| II | (23°C) kgcm/cm | 2 4 . 2 | 2 2 . 5 | 2 3 . 5 | 2 1 . 1 | 2 5 . 4 | 2 3 . 6 | 2 4 . 4 | 2 1 . 4 |
| | (-20°C) | 9 . 0 | 8 . 8 | 9 . 2 | 8 . 5 | 9 . 1 | 9 . 0 | 9 . 2 | 8 . 7 |
| Flexural modulus (10³ kg/cm²) ≠Pa | 1·13 (1 . 1 5) | 1·16 (1 . 1 8) | 1·12 (1 . 1 4) | 1·18 (1 . 2 0) | 1·08 (1 . 1 0) | 1·14 (1 . 1 6) | 1·13 (1 . 1 5) | 1·18 (1 . 1 9) |
| Tensile strength ⌐ kg/cm² MPa | 27·3 (2 7 0) | 28·0 (2 8 5) | 27·2 (2 7 7) | 28·2 (2 8 7) | 27·0 (2 7 5) | 27·7 (2 8 2) | 27·5 (2 8 0) | 28·1 (2 8 6) |
| Tensile elongtn. at break % | > 4 0 0 | > 4 0 0 | 3 0 0 | 3 5 0 | 3 5 0 | 3 5 0 | 3 5 0 | 3 0 0 |
| Weld judgement Chisso method | ◎ | ◎ | ○ | ○ | ○ | ○ | ○ | ○ |

Table 2 (5)

| | Comp.ex.16 | Comp.ex.17 | Comp.ex.18 | Comp.ex.19 | Comp.ex.20 | Comp.ex.21 | Ex.16 | Ex.17 | Ex.18 |
|---|---|---|---|---|---|---|---|---|---|
| MI (Pellet) g/10 min | 2.9 | 2.9 | 2.6 | 2.5 | 3.2 | 2.8 | 2.7 | 3.0 | 3.3 |
| FE No./1000cm³ | >1000 | >1000 | >1000 | 280 | 310 | 160 | 52 | 8 | 2 |
| DI (-20°C) kg·cm | 35 | 30 | 20 | 80 | 80 | 85 | 210 | 280 | 260 |
| II (23°C) kgcm/cm | 23.5 | 22.8 | 24.1 | 25.7 | 20.1 | 24.1 | 21.5 | 27.5 | 26.4 |
| (-20°C) | 8.6 | 8.7 | 9.0 | 9.1 | 8.5 | 9.1 | 9.5 | 9.3 | 8.9 |
| Flexural modulus (10⁴kg/cm²) ~MPa | 1.12 (1.14) | 1.08 (1.10) | 1.09 (1.11) | 1.07 (1.09) | 1.15 (1.17) | 1.13 (1.19) | 1.19 (1.2) | 1.20 (1.22) | 1.18 (1.2) |
| Tensile strength kg/cm² ~MPa | 27.7 (282) | 27.3 (278) | 26.9 (274) | 26.8 (273) | 28.1 (286) | 27.5 (280) | 28.2 (287) | 28.0 (285) | 28.4 (289) |
| Tensile elongtn.at break % | 350 | 350 | 300 | >400 | >400 | >400 | >400 | >400 | >400 |
| Weld judgement Chisso method | O | O | O | ◎ | ◎ | ◎ | ◎ | ◎ | ◎ |

## Claims

1. A continuous multi-stage process for the production of a propylene-ethylene block copolymer which comprises:

    (i) in a first polymerization stage, directed mainly to the polymerization of propylene, continuously polymerizing propylene, alone or in admixture with ethylene, in the presence of a stereoregular

16

catalyst comprising (A) a titanium-containing solid catalyst component combined with (B) an organoaluminium compound of the formula $Al(R^2)_mX_{3-m}$ (in which $R^2$ is a $C_1$-$C_{20}$ hydrocarbyl group, X is a halogen atom and $\underline{m}$ is a number from l.5 to 3), and an inert organic solvent or propylene as solvent; and

(ii) in a second polymerization stage, continuously polymerizing ethylene, alone or in admixture with propylene, in the presence of the polymerization reaction mixture from the first stage after partial inactivation of the stereoregular catalyst;

characterized in that (a) the first polymerization stage is carried out in two or more polymerization vessels connected in series and using a propylene/ethylene feed containing from 0 to 5% by weight of ethylene, based on the total of propylene and ethylene, to produce from 60 to 95% by weight of the final polymerization product; (b) the stereoregular catalyst is partially inactivated by addition thereto of a glycol ether (C) in an amount such that the ratio (mole/atom) of moles of glycol to atoms of titanium in the stereoregular catalyst (A) is from 0.01 to 1.0; the glycol ether is added either continuously or intermittently within one eight or less of the average retention time and (c) the second polymerization is carried out in one or more reaction vessels using an ethylene/propylene feed containing from 10 to 100% by weight of ethylene, based on the total weight of ethylene and propylene, to produce from 5 to 40% by weight of the final polymerization product.

2. A process according to claim 1 characterized in that the melt index of the polymer obtained in the first polymerization stage [MI(1)] and the melt index of the polymer obtained in the second polymerization stage [MI (2)] satisfy the relationship of

log MI (1)/MI (2) = 2 - 5

3. A process according to claim 1 or claim 2 characterized in that the glycol ether (C) is added in an amount such that the catalyst activity after its addition is from 30 to 80% of the catalyst activity before its addition.

**Revendications**

1. Un procédé continu à plusieurs étapes pour la production d'un copolymère bloc propylène-éthylène, comprenant:

(i) dans une première étape de polymérisation, concernant essentiellement la polymérisation du propylène, la polymérisation en continu de propylène, seul ou en mélange avec de l'éthylène, en présence d'un catalyseur stéréorégulier comprenant (A) un composé catalyseur solide à base de titanium, combiné avec (B) un composé d'organoaluminium de formule $Al(R^2)_mX_{3-m}$ (où $R^2$ est un groupe hydrocarbyle $C_1$-$C_{20}$, X est un atome d'halogène et $\underline{m}$ est un nombre de 1,5 à 3), ainsi qu'un solvant organique inerte ou du propylène comme solvant; $\overline{et}$

(ii) dans une deuxième étape de polymérisation, la polymérisation en continu d'éthylène, seul ou en mélange avec du propylène, en présence du mélange de la réaction de polymérisation de la première étape, après inactivation partielle du catalyseur stéréorégulier:

caractérisé en ce que (a) la première étape de polymérisation est effectuée dans deux ou plusieurs cuves de polymérisation, connectées en série, et utilisant une charge de propylène/éthylène contenant de 0 à 5% en poids d'éthylène, par rapport au poids total du propylène et de l'éthylène, pour produire de 60 à 95% en poids du produit de polymérisation final; (b) le catalyseur stéréorégulier est partiellement inactivé par addition d'un éther de glycol (C) dans une quantité telle que le rapport (mole/atome) entre les moles de glycol et les atomes de titanium dans le catalyseur stéréorégulier (A) soit de l'ordre de 0,01 à 1,0; l'éther de glycol est ajouté ou bien en continu ou bien par intermittence, pendant un huitième ou moins du temps de séjour moyen et (c) en ce que la deuxième étape de polymérisation est effectuée dans une ou plusieurs cuves de réaction, utilisant une charge d'éthylène/propylène contenant de 10 à 100% en poids d'éthylène, par rapport au poids total de l'éthylène et du propylène, pour produire de 5 à 40% en poids du produit de polymérisation final.

2. Un procédé selon la revendication 1, caractérisé en ce que l'indice de fusion du polymère produit au cours de la première étape de polymérisation [MI(1)] et l'indice de fusion du polymère produit au cours de la deuxième étape de polymérisation [MI(2)] correspond à la relation suivante

log MI (1) /MI (2) = 2 - 5

**3.** Un procédé selon la revendication 1 ou 2, caractérisé en ce que l'éther de glycol (C) est ajouté dans une quantité telle que l'activité du catalyseur après son addition représente 30 à 80% de l'activité du catalyseur avant son addition.

**Patentansprüche**

**1.** Kontinuierliches mehrstufiges Verfahren zur Herstellung eines Propylen-Ethylen-Blockpolymers, das

(i) in einer ersten Polymerisationsstufe, die hauptsächlich auf die Polymerisation von Propylen gerichtet ist, das kontinuierliche Polymerisieren von Propylen, allein oder in Mischung mit Ethylen, in Gegenwart eines stereoregulären Katalysators, umfassend (A) eine titaniumhaltige feste Katalysatorkomponente, kombiniert mit (B) einer Organoaluminiumverbindung der Formel $Al(R^2)_mX_{3-m}$ (worin $R^2$ eine $C_1$-$C_{20}$-Kohlenwasserstoffgruppe ist, X ein Halogenatom ist und m eine Zahl von 1,5 bis 3 ist) und ein inertes organisches Lösungsmittel oder Propylen als Lössungsmittel, und
(ii) in einer zweiten Polymerisationsstufe, das kontinuierliche Polymerisieren von Ethylen, allein oder in Mischung mit Propylen, in Gegenwart der Polymerisationsreaktionsmischung aus der ersten Stufe nach teilweiser Inaktivierung des stereoregulären Katalysators umfaßt, **dadurch gekennzeichnet,** daß (a) die erste Polymerisationsstufe in zwei oder mehr Polymerisationsbehältern, die in Serie verbunden sind, unter Verwendung einer Propylen/Ethylenbeschickung, enthaltend 0-5 Gew.-% Ethylen, bezogen auf das Gesamtgewicht an Propylen und Ethylen, durchgeführt wird, um 60-95 Gew.-% des Endpolymerisationsprodukts herzustellen; (b) der stereoreguläre Katalysator teilweise inaktiviert wird durch Zugabe eines Glykolethers (c) in einer solchen Menge, daß das Verhältnis (Mol/Atom) in Molen von Glykol zu Atomen von Titan in dem stereoregulären Katalysator (A) 0,01 bis 1,0 beträgt; der Glykolether entweder kontinuierlich oder absatzweise innerhalb eines Achtels oder weniger der durchschnittlichen Retentionszeit zugegeben wird und (c) die zweite Polymerisation in einem oder mehreren Reaktionsbehältern unter Verwendung einer Ethylen/Propylenbeschickung, enthaltend von 10 bis 100 Gew.-% Ethylen, bezogen auf das Gesamtgewicht an Ethylen und Propylen, durchgeführt wird, um 5-40 Gew.-% des Endpolymerisationsprodukts herzustellen.

**2.** Verfahren nach Anspruch 1, **dadurch gekennzeichnet,** daß der Schmelzindex des Polymers, erhalten in der ersten Polymerisationsstufe, [MI(1)] und der Schmelzindex des Polymers, erhalten in der zweiten Polymerisationsstufe, [MI(2)], der Beziehung

log MI(1)/MI(2) = 2 - 5

genügt.

**3.** Verfahren nach Anspruch 1 oder 2, **dadurch gekennzeichnet,** daß der Glykolether (C) in einer solchen Menge zugegeben wird, daß die Katalysatoraktivität nach seiner Zugabe 30 bis 80 % der Katalysatoraktivität vor seiner Zugabe beträgt.

DEGASSING

1 PROPYLENE POLYMERIZATION VESSEL

H2

C2=

C3=

DEGASSING

H2

Cat.

n-C6

C3=

GE

5 PRESSURE DROP VESSEL

3 PRESSURE DROP VESSEL

4 PROPYLENE-ETHYLENE POLYMERIZATION VESSEL

2 PROPYLENE POLYMERIZATION VESSEL

TO POST-TREATMENT

EP 0 225 099 B1